Europäisches Patentamt

European Patent Office

Office européen des brevets

(19)

(11) **EP 0 671 205 B1**

(12) **FASCICULE DE BREVET EUROPEEN**

(45) Date de publication et mention
de la délivrance du brevet:
**03.05.2000 Bulletin 2000/18**

(51) Int Cl.[7]: **B01J 13/00**, C01F 17/00,
C01B 13/32, C10L 1/12,
C10L 1/10, C10L 10/06,
C10L 10/02

(21) Numéro de dépôt: **95400256.4**

(22) Date de dépôt: **08.02.1995**

(54) **Sol organique d'oxyde tétravalent et son utilisation comme additif de composés hydrocarbones**

Organische Sole von vierwertigen Metalloxid und deren Verwendung in Kohlenwasserstoffzusammensetzungen

Organic sole of or tetravalent metal oxid and their use as additive in hydrocarbon compositions

(84) Etats contractants désignés:
**AT BE CH DE DK ES FR GB GR IE IT LI LU MC NL PT SE**

(30) Priorité: **18.02.1994 FR 9401854**
**28.10.1994 FR 9412945**

(43) Date de publication de la demande:
**13.09.1995 Bulletin 1995/37**

(73) Titulaire: **RHODIA CHIMIE**
**92408 Courbevoie Cédex (FR)**

(72) Inventeurs:
• **Chopin, Thierry**
**F-95320 Saint-Leu La Foret (FR)**
• **Touret, Olivier**
**F-17000 La Rochelle (FR)**
• **Macaudiere, Pierre**
**F-92600 Asnieres/Seine (FR)**

(74) Mandataire: **Seugnet, Jean Louis et al**
**RHODIA SERVICES,**
**Direction de la Propriété Industrielle**
**25, quai Paul Doumer**
**92408 Courbevoie Cedex (FR)**

(56) Documents cités:
EP-A- 0 097 563       EP-A- 0 206 907
EP-A- 0 238 367       EP-A- 0 300 851
EP-A- 0 575 189       WO-A-79/00248
FR-A- 2 698 346       GB-A- 988 330
GB-A- 2 075 478

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention a pour objet un nouveau sol d'oxyde tétravalent, et notamment de cérium. Elle concerne plus particulièrement les sols organiques de haute stabilité et de granulométrie régulée.

La présente invention a également pour objet un procédé d'utilisation de ces sols.

Au cours des études menées au cours des deux dernières décennies, on a développé des suspensions colloïdales en milieu organique de particules micrométriques ou sub-microniques, dont les propriétés s'apparentent à celles des solutions. Ces suspensions colloïdales sont généralement désignées par le terme de "sols" par les spécialistes en la matière.

Ces sols présentaient soit la propriété d'être stables dans le temps et de granulométrie grossière (en général, diamètre dynamique de l'ordre du micromètre et forte viscosité), soit de granulométrie fine mais de stabilité faible : durée de demie vie au plus égale à un ou deux mois, et de concentration relativement peu élevée.

Mais à ce jour, à la connaissance de la demanderesse, nul n'est parvenu à obtenir simultanément ces propriétés.

Or, pour certaines utilisations, ces propriétés sont indispensables. Plus particulièrement pour les raisons exposées ci-après, l'utilisation comme additif des carburants des moteurs à combustion interne demande à la fois la possibilité d'exister en forte concentration, la nécessité de présenter une faible granulométrie et une stabilité très importante.

L'utilisation comme additif des moteurs de Diesel constitue un bon exemple des contraintes auxquelles doit se plier un tel sol.

Lors de la combustion du gazole dans le moteur Diesel, les produits carbonés ont tendance à former des suies, qui sont réputées nocives tant pour l'environnement que pour la santé. Il est recherché depuis longtemps des techniques qui permettent de réduire l'émission de ces particules carbonées, qu'on désignera dans la suite de la description sous l'expression de "suies".

Cette recherche est concomitante avec la nécessité de ne pas augmenter l'émission de monoxyde de carbone et de gaz réputés toxiques et mutagènes, tels que les oxydes d'azote.

De très nombreuses solutions ont été proposées pour réduire ces émissions carbonées.

Toutefois, on s'oriente de plus en plus vers l'adaptation dans les circuits d'échappement d'un filtre susceptible d'arrêter la totalité, ou une très forte proportion (au moins 80 % en masse) des particules carbonées engendrées par la combustion des divers combustibles.

Cette technique est toutefois limitée par la capacité de stockage du filtre, qu'il faut soit vider, soit en brûler les suies contenues. Cette opération dite de régénération est extrêmement coûteuse à prévoir et à mettre en oeuvre. Une des solutions les plus couramment proposées est la combustion de ces suies, combustion qui est provoquée de manière intermittente soit par un chauffage électrique, soit par l'utilisation d'un combustible allumeur fossile.

Cette technique présente toutefois de nombreux inconvénients, dont le moindre n'est pas le risque de choc thermique conduisant à une fracture ou une fissuration du filtre céramique, ou une fusion du filtre métallique.

Une solution qui serait satisfaisante consiste à introduire dans les suies des catalyseurs qui permettent une auto-inflammation fréquente des suies collectées dans le filtre. Pour cela, il faut que ces suies présentent une température d'auto-inflammation suffisamment basse pour être fréquemment atteinte pendant une marche normale du moteur.

Au cours du programme de recherche qui a conduit à la présente invention, il a été prouvé que le cérium pouvait constituer un bon élément pour réduire la température d'auto-inflammation des suies.

Toutefois, pour être utilisés de manière convenable et pour répondre à des dispositions d'ordre réglementaire, il est prévu que les additifs doivent être introduits au fur et à mesure des besoins, à partir d'un réservoir qui doit pouvoir n'être remplacé que tous les 50 000 kilomètres.

Dans ces conditions, les additifs doivent être à la fois très concentrés et suffisamment stables pour ne point être altérés par les conditions d'agitation liées à la marche du véhicule, et par l'intervalle pluriannuel entre deux remplacements.

La demande de brevet européen EP 97563 décrit un procédé de préparation de dispersions colloïdales de dioxyde cérique dans des liquides organiques inertes. Le procédé décrit permet d'obtenir un produit bien dispersé. Toutefois, la dispersion obtenue par ce procédé reste stable à condition d'être conservée dans un récipient fermé.

Il est donc nécessaire d'améliorer encore la stabilité de ce type de dispersion. C'est pourquoi un des buts de la présente invention est de fournir un sol d'oxyde de cérium tétravalent, qui soit à la fois très concentré et encore plus stable par rapport aux sols connus.

Cette stabilité doit s'entendre non seulement lorsque le sol est concentré, mais aussi lorsque le sol est dilué.

Un autre but de la présente invention est de fournir un réactif qui, après introduction dans un gazole, puis après combustion, donne une bonne auto-inflammation des suies.

Ces buts et d'autres qui apparaîtront par la suite, sont atteints au moyen d'un sol organique comportant :

- des particules de bioxyde de cérium (IV)
- un système acide amphiphile comportant au moins un acide de 11 à 50 atomes de carbone, présentant au moins une ramification en alpha, bêta, gamma, ou delta de l'atome porteur de l'hydrogène acide, et avec comme condition que lorsque ledit système est un mélange d'acides, la moyenne des atomes de carbone des acides du système est au moins égale à 10, et

- un diluant,

caractérisé en ce que lesdites particules sont sous forme d'agglomérats de cristallites. cristallites dont le $d_{80}$, avantageusement le $d_{90}$, est au plus égal à 5 nanomètres. 90 % en masse des agglomérats comportant de 1 à 5 cristallites, et en ce que le sol est susceptible d'être obtenu par un procédé comportant les étapes suivantes :

(a) on soumet une phase aqueuse d'un sel de cérium (IV) à une opération de thermohydrolyse par chauffage de cette phase à une température comprise entre 80°C et la température critique de ladite phase, de manière à précipiter un bioxyde de cérium ;

(b) on met en contact, simultanément ou consécutivement, une suspension aqueuse de bioxyde de cérium issue de l'étape (a) avec le système d'acide amphiphile précité et le diluant ; puis

(c) on récupère le sol organique.

Dans la présente description, les caractéristiques de granulométrie font souvent référence à des notations du type $d_n$ où n est un nombre de 1 à 99, cette notation est bien connue dans de nombreux domaines techniques, mais est un peu plus rare en chimie, aussi peut-il être utile d'en rappeler la signification. Cette notation représente la taille de particule telle que n % (en poids, ou plus exactement en masse, puisque le poids n'est pas une quantité de matière mais une force) des particules soit inférieur ou égal à ladite taille.

Avantageusement 50 % (valeur statistique) au moins en masse des agglomérats sont monocristallins, c'est à dire qu'ils ne sont constitués que d'un seul cristallite (ou du moins apparaissent n'être constitués que d'un seul cristallite lorsque l'on examine le sol par METHR (Microscopie Electronique par Transmission à Haute Résolution).

En outre, on peut, en jouant sur la technique et les conditions d'hydrolyse, faire en sorte que 80 %, de préférence 90 % en masse des cristallites soient de taille inférieure à une valeur choisie à l'avance dans l'intervalle 2 à 5 nanomètres de préférence 3 à 4 nanomètres.

Avantageusement le rapport molaire entre le dit acide amphiphile et les éléments métalliques du sol est au plus égal à 0,5 ; avantageusement à 0,4 ; de préférence à 0, 3. Ici le rapport molaire doit être pris dans l'acceptation d'un rapport molaire fonctionnel, (c'est à dire que l'on compte comme mole d'acide amphiphile, le nombre de mole multiplié par le nombre n de fonctions acides utiles). Plus précisément le nombre d'équivalents d'acide représente le nombre de molécules d'acide lorsque l'acide utilisé est monofonctionnel, et il faut doubler ou tripler ce nombre, dans le cas de diacides ou triacides et, plus généralement, le multiplier par le nombre de fonctions acide dans le cas d'un polyacide.

Il est souhaitable que, dans le sol, la teneur en cérium III résiduel par rapport au cérium IV soit aussi faible que possible, en général inférieure à 1,5 %, avantageusement au plus égale à 1 % de préférence à 1/2 %.

Avantageusement le sol présente une concentration telle que la teneur en bioxyde de cérium (avec son cortège d'impuretés) contenu soit comprise entre 20 et 60 %, de préférence 30à 50 % en masse.

La viscosité du sol est déterminée par le temps d'écoulement du sol , ce temps est avantageusement au plus d'une demi minute.

Ainsi le cérium, éventuellement avec ses impuretés, est essentiellement sous forme d'agglomérats d'oxyde métallique, bioxyde éventuellement hydraté, lequel agglomérat d'oxyde(s) est rendu liposoluble au moyen d'un acide organique amphiphile.

Les impuretés du cérium pouvant l'accompagner dans le sol, sont des espèces provenant de la co-hydrolyse de cations métalliques à caractère acide accompagnant usuellement le cérium (tel que autres terres rares, actinides....).

Par cation métallique à caractère acide, on désigne un cation métallique, le plus souvent correspondant à l'état d'oxydation le plus élevé de l'élément métallique en question, et dont l'hydroxyde précipite à des faibles valeurs de pH de préférence à un pH inférieur à 4. L'état d'oxydation est le plus souvent IV. A titre de cations acide, on peut citer : le cérium avec le cortège d'impuretés usuel dans les minerais ou produit recyclés. Dans ces mélanges bruts, pour qu'ils soient utilisables, les impuretés du cérium représentent au plus 1/10, avantageusement 1/20, de préférence 1/50 des cations précipitables.

Ces limitations sont des limitations du procédé mais à l'intérieur de la zone préférée on peut choisir tout degré de pureté.

Un autre but de la présente invention est de fournir un procédé qui permet la fabrication de dispersions colloïdales d'un composé de cérium IV.

Il a maintenant été trouvé et c'est ce qui constitue un des buts de la présente invention un procédé de préparation d'un sol organique tel que décrit plus haut, caractérisé en ce qu'il comporte les étapes suivantes :

(a) on soumet une phase aqueuse d'un sel de cérium (IV) à une opération de thermohydrolyse par chauffage de cette phase à une température comprise entre 80°C et la température critique de ladite phase, de manière à

# EP 0 671 205 B1

précipiter un bioxyde de cérium ;

(b) on met en contact, simultanément ou consécutivement, une suspension aqueuse de bioxyde de cérium issue de l'étape (a) avec le système d'acide amphiphile précité et le diluant ; puis

(c) on récupère le sol organique.

Avantageusement, on peut procéder entre l'étape a) et l'étape b) à une séparation des particules solides des eaux-mères, éventuellement à un séchage de préférence par atomisation, puis à repulper les particules solides en phase aqueuse laquelle sera alors soumise à l'étape b). Le repulpage est mené de manière que la teneur en bioxyde de cérium dans la phase aqueuse soit comprise entre 100 et 400 g/l.

Le procédé de synthèse des compositions selon l'invention va maintenant être développé plus en détail.

Selon une mise en oeuvre avantageuse de la présente invention, ce séchage est réalisé par atomisation, c'est à dire par pulvérisation du mélange de sols dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

On notera que l'on peut également mettre en oeuvre l'opération d'atomisation-séchage au moyen d'un réacteur "flash", par exemple du type mis au point par la Demanderesse et décrit notamment dans les demandes de brevet français n° 2257326, 2419754 et 2431321. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines gouttelettes, du mélange initial, et d'autre part le séchage des gouttelettes obtenues. Par ailleurs, le temps de séjour extrêmement faible (généralement inférieur à 1/10 de seconde environ) des particules dans le réacteur présente pour avantage, entre autres, de limiter d'improbables risques de surchauffe par suite d'un contact trop long avec les gaz chauds. Il convient ici de noter que ce traitement d'atomisation permet d'améliorer significativement l'aptitude d'un sol thermohydrolysé à "basse" température à former des sols stables et même lorsque la température des gaz est au moins égale à 200°C (2 chiffres significatifs), de préférence entre 200 et 300°C, d'obtenir des résultats similaires à ceux qui sont obtenus par une thermohydrolyse à "haute" température (150°C) et donc des sols selon la présente invention qui soient optimaux.

La température de l'atmosphère de séchage peut varier dans de larges limites, et elle dépend notamment du temps de séjour moyen que l'on désire ou que l'on peut imposer au produit atomisé une fois dans ladite atmosphère. D'une manière générale, les conditions du séchage (températures et/ou temps de séjour) sont déterminées classiquement de manière à au moins obtenir une élimination totale ou quasi totale de l'eau résiduelle contenu dans le produit, c'est à dire, globalement, jusqu'à l'obtention d'un poids constant pour ce dernier.

A titre de composés solubles dans l'eau du cérium, on peut citer notamment les sels de cérium IV tels que nitrates ou nitrates céri-ammoniacaux par exemple, qui conviennent ici particulièrement bien. De préférence, on utilise du nitrate cérique. La solution de sels de cérium IV peut contenir sans inconvénient du cérium à l'état céreux mais il est souhaitable qu'elle contienne au moins 85% de cérium IV. Une solution aqueuse de nitrate cérique peut par exemple être obtenue par réaction de l'acide nitrique sur un oxyde cérique hydraté préparé d'une manière classique par réaction d'une solution d'un sel céreux, par exemple le carbonate céreux, et d'une solution d'ammoniaque en présence d'eau oxygénée. On peut également, de préférence, utiliser une solution de nitrate cérique obtenue selon le procédé d'oxydation électrolytique d'une solution de nitrate céreux tel que décrit dans le document FR-A- 2 570 087, et qui constitue ici une matière première de choix.

On notera ici que la solution aqueuse de sels de cérium IV peut présenter une certaine acidité libre initiale, par exemple une normalité variant entre 0,1 et 4 N. Selon la présente invention, il est autant possible de mettre en oeuvre une solution initiale de sels de cérium IV présentant effectivement une certaine acidité libre comme mentionné ci-dessus, qu'une solution qui aura été préalablement neutralisée de façon plus ou moins poussée par ajout d'une base, telle que par exemple une solution d'ammoniaque ou encore d'hydroxydes d'alcalins (sodium, potassium,...), mais de préférence une solution d'ammoniaque, de manière à limiter cette acidité. On peut alors, dans ce dernier cas, définir de manière pratique un taux de neutralisation (r) de la solution initiale de cérium par l'équation suivante :

$$r = \frac{n3 - n2}{n1}$$

dans laquelle n1 représente le nombre total de moles de Ce IV présentes dans la solution après neutralisation ; n2

4

représente le nombre de moles d'ions OH⁻ effectivement nécessaires pour neutraliser l'acidité libre initiale apportée par la solution aqueuse de sel de cérium IV ; et n3 représente le nombre total de moles d'ions OH⁻ apportées par l'addition de la base. Lorsque la variante "neutralisation" est mise en oeuvre, on utilise dans tous les cas une quantité de base qui doit être impérativement inférieure à la quantité de base qui serait nécessaire pour obtenir la précipitation totale de l'espèce hydroxyde $Ce(OH)_4$ (r=4). Dans la pratique, on se limite ainsi à des taux de neutralisation n'excédant pas 1, et de préférence encore n'excédant pas 0,5.

Le mélange initial étant ainsi obtenu, on procède ensuite, conformément à la deuxième étape du procédé selon l'invention (étape (a) ), à son chauffage.

La température à laquelle est menée le traitement thermique (a), aussi appelé thermohydrolyse, peut être comprise entre 80°C et la température critique du milieu réactionnel, en particulier entre 80 et 350°C, de préférence entre 90 et 200°C.

Ce traitement peut être conduit, selon les conditions de températures retenues, soit sous pression normale atmosphérique, soit sous pression telle que par exemple la pression de vapeur saturante correspondant sensiblement à la température du traitement thermique.

Lorsque, comme cela est préféré, la température de traitement est choisie supérieure à la température de reflux (sous pression ordinaire) du mélange réactionnel (c'est à dire généralement supérieure à 100°C), par exemple choisie entre 120, plus souvent entre 150 et 350°C, on conduit alors l'opération dans une enceinte close. On introduit le mélange aqueux contenant les espèces précitées dans cette enceinte (réacteur fermé plus couramment appelé autoclave), la pression nécessaire ne résultent alors que du seul chauffage du milieu réactionnel (pression autogène).

Dans les conditions de températures données ci-dessus, et en milieux aqueux, on peut ainsi préciser, à titre illustratif, que la pression dans le réacteur fermé varie entre une valeur supérieure à 1 Bar ($10^5$ Pa) et 200 Bar (2. $10^7$ Pa), de préférence entre 5 Bar (5. $10^5$ Pa) et 150 Bar ($1,510^7$ Pa). Il est bien entendu également possible d'exercer une pression extérieure qui s'ajoute alors à celle consécutive au chauffage.

Le chauffage peut être conduit soit sous atmosphère d'air, soit sous atmosphère de gaz inerte, de préférence l'azote.

La durée du traitement n'est pas critique, et peut ainsi varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

A l'issue de l'étape (a) de chauffage, on récupère un précipité solide qui peut être séparé de son milieu par toute technique classique de séparation solide-liquide telle que par exemple, élutriation, filtration, décantation, essorage ou centrifugation.

On notera qu'il est bien entendu possible de répéter une ou plusieurs fois, à l'identique ou non, une étape de chauffage/précipitation telle que ci-dessus définie, en mettant alors en oeuvre par exemple des cycles de traitements thermiques.

A titre indicatif, on peut utiliser comme solution de départ à la thermolyse des solutions de cérium IV, en général de nitrate, répondant aux caractéristiques suivantes :

| Caractéristiques | Possible | Zone Avantageuse | Préférée |
|---|---|---|---|
| Teneur en cérium | de 1g/l à la limite de solubilité | entre 40 et 120g/l | entre 60 et 100g/l |
| Acidité | | r au plus égal à 1 | r compris entre 0,5 et -0,5 |
| Contre ion du cérium | tout anion faiblement complexant | anion oxygéné et non complexant | nitrate |

La caractéristique de l'étape (b) du procédé de l'invention est d'obtenir un sol organique, expression qui désigne la dispersion du bioxyde de cérium, éventuellement impur (ci-après le bioxyde de cérium sera parfois désigné par le composé du cation $M^{n+}$), en milieu organique, par transfert dudit bioxyde de cérium en phase organique, à partir d'une phase aqueuse constituée par le composé cérique qui se trouve sous forme colloïdale dans un sol aqueux.

On désigne par sol aqueux, la dispersion colloïdale du composé du cation $M^{n+}$ en milieu aqueux qui constitue la matière première de base du procédé de l'invention.

Afin de conduire de manière satisfaisante le procédé de l'invention, il est souhaitable que le sol aqueux de départ satisfasse aux exigences suivantes :

■ le taux de métal sous forme d'oxyde (lato sensu) colloïdale doit être très aussi élevé, avantageusement 90 %, de préférence supérieur ou égal à 95 % et en règle générale aussi élevé que possible

■ la concentration du sol aqueux en oxyde (lato sensu) colloïdale doit être suffisante et se situer de préférence entre 0,1 et 3 moles/litre,

■ le sol aqueux doit présenter de bonnes propriétés de stabilité thermique et ne pas floculer à la température de réaction qui est supérieure à 60°C et varie le plus souvent entre 80 et l'ébullition (variable selon la pression).

Le milieu liquide organique utilisé dans le procédé de l'invention peut être un hydrocarbure aliphatique ou cycloaliphatique inerte où leur mélange tel que par exemple des essences minérales où de pétrole, éthers minéraux où de pétrole pouvant contenir également des composantes aromatiques. Les exemples comprennent l'hexane, l'heptane, l'octane, le nonane, le décane, le cyclohexane, le cyclopentane, le cycloheptane et les naphtènes liquides. Les solvants aromatiques tels que le benzène, le toluène, l'éthylbenzène et les xylènes conviennent également ainsi que les coupes pétrolières du type Solvesso (marque déposée par la Société EXXON) notamment le Solvesso 100 qui contient essentiellement un mélange de méthyléthyl et triméthylbenzène et le Solvesso 150 qui renferme un mélange d'alcoylbenzènes en particulier de diméthyléthylbenzène et de tétraméthylbenzène.
On peut mettre en oeuvre également des hydrocarbures chlorés tels que le chloro- ou dichlorobenzène et le chlorotoluène aussi bien que des éthers aliphatiques et cycloaliphatiques tels que l'éther de diisopropyle, l'éther de dibutyle et les cétones aliphatiques et cycloaliphatiques telles que la méthylisobutylcétone, la diisobutylcétone, l'oxyde de mésityle.
Les esters peuvent être envisagés, mais ils présentent l'inconvénient de risquer d'être hydrolysés. On peut citer comme esters susceptibles d'être utilisés ceux issu des acides cité dans la présente demande avec des alcools en C1 à C8 et notamment les palmitates d'alcool secondaire tel l'isopropanol.
On choisira le liquide organique ou système solvant en tenant compte de l'acide organique solubilisant utilisé, de la température de chauffage et de l'application finale de la solution ou dispersion colloïdale. Dans certains cas, il est préférable d'employer un mélange de solvants. La quantité de liquide ou solvant détermine évidemment la concentration finale. Il est plus économique et plus commode de préparer des dispersions plus concentrées qui pourront être diluées plus tard, lors de leur emploi. C'est pour cette raison que la quantité de solvant n'est pas critique.
Il peut être avantageux d'ajouter dans la phase organique un agent promoteur dont la fonction est d'accélérer le transfert des colloïdes de la phase aqueuse à la phase organique et d'améliorer la stabilité des sols organiques obtenus. A titre d'agents promoteurs, on peut utiliser les composés à fonction alcool et tout particulièrement des alcools aliphatiques linéaires ou ramifiés ayant de 6 à 12 atomes de carbone.
Comme exemples spécifiques, on peut citer l'éthyl-2 hexanol, le décanol, le dodécanol où un mélange d'entre eux.
La proportion dudit agent dans la phase organique n'est pas critique et peut varier dans de larges limites.
Toutefois une proportion comprise entre 2 et 15 % en poids convient généralement bien.
Si le champ des acides utilisables est très vaste, le nombre total de carbone dans la molécule pour obtenir une bonne dissolution, est toutefois un peu plus contraignant. Le nombre total (moyen si l'acide utilisé est un mélange) de carbone des acides est avantageusement supérieur à 6 de préférence à 10, il est également souhaitable qu'il soit inférieur à environ 60.
Si l'on désire des concentrations élevée en cérium, ou équivalent il est souhaitable de choisir des acides aussi court que possible.
Ces acides peuvent être linéaires ou ramifiés. Il est préférable toutefois que les ramifications soient, soit loin de la fonction carboxylique, soit peu nombreuses et portées par des carbones différents. Les acides carboxyliques utilisables pour la présente invention peuvent être des acides aryliques, aliphatiques ou arylaliphatiques. Ils peuvent porter d'autres fonctions à condition que ces fonctions soient stables dans les milieux ou l'on désire utiliser les composés de cérium selon la présente invention.
Pour que le sol reste utilisable au température basse, en dessous de l'ambiante, voire en dessous de zéro degré centigrade, il est préférable que le point de fusion de l'acide, ou du mélange d'acide soit au plus égal à 50°C avantageusement à l'ambiante, de préférence à zéro degré centigrade.
Ainsi, on peut aisément utiliser des acides carboxyliques dont la chaîne carbonée porte des fonctions cétoniques comme les acides pyruviques substitués en alpha de la fonction cétone. Cela peut être également des acides alpha-halogéno carboxyliques ou des acides alpha-hydroxycarboxyliques.
La chaîne rattachée au groupe carboxylique peut porter des insaturations. Toutefois en général on tend à éviter de trop nombreuses doubles liaisons car le cérium catalyse la réticulation des doubles liaisons. La chaîne peut être interrompue par des fonctions éther ou ester à condition de ne pas trop altérer la lipophilicité de la chaîne porteuse du groupe carboxylique.
Ainsi on peut mettre en oeuvre des acides carboxyliques aliphatiques, des acides sulfoniques aliphatiques, des acides phosphoniques aliphatiques, des acides alcoylarylsulfoniques et des acides alcoylarylphosphoniques possédant environ de 10 à environ 40 atomes de carbone, qu'ils soient naturels ou synthétiques. On peut les utiliser seuls ou en mélange entre eux.
A titre d'exemples paradigmatiques, on peut citer les acides gras de tallol, d'huile de coco, de soja, de suif, d'huile de lin, l'acide oléique, l'acide linoléique, l'acide stéarique et ses isomères, l'acide, l'acide pélargonique, l'acide caprique, l'acide laurique, l'acide myristique, l'acide dodécylbenzènesulfonique, l'acide éthyl-2 hexanoïque, l'acide naphténique, l'acide hexoïque, l'acide toluène-sulfonique, l'acide toluène-phosphonique, l'acide lauryl-sulfonique, l'acide lauryl-phosphonique, l'acide palmityl-sulfonique et l'acide palmityl-phosphonique. D'une manière préférentielle, on utilise l'acide oléique ou les acides alcoylarylsulfoniques.

La quantité d'acide organique amphiphile mise en oeuvre exprimée en nombre de moles d'acide par mole d'oxyde (lato sensu) peut varier dans de larges limites entre 1/10 et 1 mole par mole de bioxyde de cérium. La borne supérieure ne présente pas de caractère critique mais il n'est pas nécessaire de mettre en jeu davantage d'acide. D'une manière préférentielle, l'acide organique est mis en oeuvre à raison de 1/5 à 4/5 mole par mole de bioxyde de cérium.

Dans la phase organique, la proportion entre le solvant organique et l'acide organique n'est pas critique. Le rapport pondéral entre le solvant organique et l'acide organique est choisi, de préférence, entre 0,3 et 2,0.

L'ordre d'introduction des différents réactifs est indifférent. On peut effectuer le mélange simultané de la ou des dispersions aqueuses colloïdales, de l'acide organique, du solvant organique et éventuellement de l'agent promoteur. On peut également faire le prémélange de l'acide organique, du solvant organique et éventuellement de l'agent promoteur qui constituent la phase organique.

La température du milieu réactionnel est choisie préférentiellement dans un intervalle allant de 60°C à 150°C.

Dans certains cas, en raison de la volatilité du solvant organique il y a lieu de condenser ses vapeurs par refroidissement à une température inférieure à son point d'ébullition.

Avantageusement, on travaille à une température comprise entre 60 et 120°C, de préférence entre 90 et 110°C.

On maintient le mélange réactionnel sous agitation pendant toute la durée du chauffage qui peut être de moins d'une heure à une journée environ, de préférence entre 2 heures et une demi-journée.

Au bout du temps de chauffage précité, on arrête le chauffage. On note la présence de deux phases : une phase organique contenant en dispersion, le complexe oxyde métallique - acide organique et une phase aqueuse résiduelle. On sépare ensuite la phase organique et la phase aqueuse selon les techniques classiques de séparation : décantation, centrifugation, etc...

Conformément à la présente invention, on obtient des dispersions organiques colloïdales d'oxyde(s) métallique(s) dont la taille des colloïdes peut être très variable et peut être contrôlée en jouant sur certains paramètres notamment le diamètre des dispersions aqueuses colloïdales de départ laquelle dépend du respect des conditions de thermohydrolyse.

Pour certaines applications il est possible d'utiliser le mélange réactionnel tel quel mais parfois il est souhaitable d'éliminer l'eau qui peut représenter de 1 à 3 % en poids de la phase organique. A cet effet, on met en oeuvre les moyens bien connus par l'homme de l'art, par exemple passage sur agent de dessiccation (y compris un filtre à membrane hydrophobe) ou l'adjonction d'un tiers solvant inerte par rapport au composé de $M^{n+}$, ayant un point d'ébullition, de préférence, inférieur à 100°C et formant un azéotrope avec l'eau puis distillation de l'azéotrope obtenu. A titre de tiers solvants convenant à l'invention, on peut citer les hydrocarbures aliphatiques, tels que l'hexane, l'heptane, les hydrocarbures cycloaliphatiques : aromatiques, ou les alcools tels que par exemple, éthanol, éthylène glycol, diéthylène glycol etc...

Il est préférable, notamment pour les applications comme adjuvant du gazole que la teneur en eau soit au plus égale à 1 %, avantageusement à 1 pour mille, de préférence à 100 ppm.

L'on va maintenant examiner le second terme de l'alternative, à savoir contrainte forte pour les acides amphiphiles, mais plus faibles pour ressentiel des particules.

Il convient de rappeler que les meilleures performances des sols sont obtenues lorsque un système de contraintes est complété au moins partiellement par diverses contraintes de l'autre système. Certaines des contraintes sont communes, aussi les descriptions détaillées dans la première partie ne sont reprises que succinctement dans cette deuxième partie. les sols répondant aux deux types de contraintes sont les meilleurs.

Le domaine préféré est de 15 à 25 atomes de carbone pour les acides dudit système amphiphile.

Lorsque le système est un mélange d'acides le nombre de carbone peut être fractionnaire puisqu'il s'agit alors d'une moyenne et les contraintes sur la moyennes sont avantageusement les même que celles ci-dessus pour l'un des, ou le, constituant(s) dudit système amphiphile. La contrainte minimale est que la moyenne des atomes de carbone des acides dudit système amphiphile soit au moins égale à 10 atomes de carbone. Plus spécifiquement la moyenne des atomes de carbone des acides dudit système amphiphile est avantageusement de 11 à 25, de préférence de 15 à 25. Pour obtenir de meilleurs résultats, surtout quand la longueur de chaîne est faible (inférieure à 14 atomes de carbone), lorsque la ramification est unique et surtout lorsqu'elle est située en position gamma ou delta de l'atome porteur de l'hydrogène acide, il est très souhaitable que cette ramification soit d'au moins deux atomes de carbone, avantageusement trois.

Pour expliciter la nomenclatures des positions on trouvera ci-après les exemples du phosphate acide de di éthyl-2hexyles et de l'acide éthyl-2 octanoique

| position | alpha | bêta | gamma | delta | |
|---|---|---|---|---|---|
| (fonction H) | - (atome) | - (atome) | - (atome) | - (atome) | - (atome) |
| HO | -P(C8H17) | -0 | -CH2 | -CH(C2H5) | -CH2(C3H7) |
| HO | -CO | -CH(C2H5) | CH2 | CH2 | CH2(C3H7) |

On préfère que la partie linéaire la plus longue soit d'au moins 6, de préférence 8 carbones.

Il est avantageux que le pKa d'au moins un des acides soit au plus égal à 5, de préférence à 4,5.

Il est également avantageux que la ou les chaîne(s) latérale(s) des acides ramifiés comporte au moins deux atomes, de préférence trois atomes de carbone.

Il est préférable, notamment lorsque les acides sont des acides carboxyliques, que le système d'acide amphiphile soit un mélange d'acides.

Dans ce cas les conditions sur la ramification doivent jouer sur au moins la moitié, avantageusement le deux tiers, de préférence les quatre cinquièmes en mole des acides constitutifs dudit système d'acide(s) amphiphile.

Parmi les acides donnant de très bons résultats, on peut citer les acides contenant du phosphore, comme les acides phosphoriques, notamment les diesters de l'acide phosphorique, les acides phosphoniques, et leurs mono esters, et les acides phosphiniques.

Parmi les acides carboxyliques donnant de bons résultats, il convient de citer les acides constitutifs du mélange d'acides connu sous le nom d'acide isostéarique. Le système d'acide est avantageusement l'acide isostéarique lui-même.

Le point de fusion commençante du système d'acide(s) amphiphile(s) est avantageusement inférieur à 50°C, plus avantageusement inférieur ou égal à 20°C, de préférence au plus égal à 0°C.

Pour une bonne stabilité et pour une bon extraction il est souhaitable que le rapport molaire entre l'extractant et le métal tétravalent, de préférence le cérium, soit compris entre 0,1 et 0,6, de préférence entre 0,2 et 0,4. Ce rapport croit quand la taille des particules décroît.

Pour obtenir des sols particulièrement stables, comme il a été montré que la présence de particules grossières nuisait à la stabilité à long terme des sols selon la présente invention, ou même des sols réalisés à partir d'acides plus classiques, il est préférable qu'au plus 5 %, avantageusement au plus 1 %, de préférence au plus 0,5 % en masse des particules d'oxyde de métal tétravalent, soit au plus égal à 0,1 micromètre, avantageusement à 0,05 micromètre, de préférence à 0,02 micromètre.

Tout diluant conduisant à un sol stable entre dans le cadre de cette invention.

Les sols selon la présente invention peuvent être utilisés selon de nombreuses mises en oeuvre. Selon la mise en oeuvre désirée, il convient de choisir un compromis en tenant compte des données techniques ci-après ; pour la synthèse et la stabilité il est souhaitable d'éviter les hydrocarbures très apolaires, comme par exemple les hydrocarbures aliphatiques non cycliques. les diluants, tels les ester ou éthers, présentant une fonction polaires donnent de bons résultats, mais pour certains usages peuvent être à éviter dans la mesure du possible. le mélange de diluants peut apporter une solution en compensant la non polarité de certains diluants par l'adjonction de composés polaires, en général des solvants.

Selon une mise en oeuvre particulièrement avantageuse de la présente invention, le sol est utilisé pour former un sol dilué dans un gazole. le sol initial est en général très concentré, ce qui limite la latitude de l'homme de métier. Par ailleurs pour des raisons de compatibilité avec le gazole, et ses nombreux additifs, les diluants sont alors de préférence peu polaires. Comme éléments constitutifs d'un diluant, les composés aromatiques ou aliphatiques sont préférables aux composés présentant une fonction polaire, tel que par exemple les fonctions ester ou éther.

Il est préférable que les diluants aient un indice de Kauri Butanol (mesuré selon la norme ASTM D II 33) inférieur à 105, avantageusement inférieur à 90.

Pour l'utilisation en tant qu'additif embarqué il est préférable que le point de fusion des diluants, ou mélanges de diluants, soient bas et répondent aux contraintes de point de fusion décrites dans le présent titre à propos du système d'acide amphiphile.

Il est également préférable que ces diluants présentent une solubilité dans l'eau très faible, de préférence inférieure à 5 % en masse, de préférence au plus à 1 %, plus préférentiellement au plus égale à 0,5 % en masse.

De manière symétrique, il est également préférable que l'eau soit soluble à au plus 5 %, de préférence au plus à 1 %, plus préférentiellement au plus à 0,5 % dans le diluant.

Parmi les diluants préférés, il en vient de citer les composés hydrocarbonés aromatiques et leurs mélanges, ainsi que les composés aliphatiques et leurs mélanges contenant moins de 50 %, de préférence 25 % ou plus préférentiellement 1 % de composés aromatiques.

Les oxydes de métal tétravalent peuvent contenir des proportions relativement réduites de métaux présentant d'autres valences. En général, la proportion d'éléments d'addition, ou d'impuretés, contenue dans les particules de métal té-

EP 0 671 205 B1

travalent, ne dépasse 10 % en masse, plus généralement 5 % en masse.

La teneur en métal tétravalent du sol selon l'invention est avantageusement au plus égale 2/3 en masse de préférence entre 30 et 40 % (masse). Pour l'utilisation en additif pour diesel embarqué, il est préférable que la teneur ne descendent pas en dessous de 1/6 de préférence de 1/5.

Les sols organiques, selon la présente invention, sont en général préparés de manière connue par chauffage d'un sol aqueux contenant le dit oxyde de métal tétravalent, en présence dudit diluant et dudit système acide amphiphile.

Selon une des caractéristiques particulièrement avantageuses de l'invention il convient de veiller à ce que il n'y ait aucune particule trop grossière dans le sol aqueux et donc dans le sol final.

L'élimination des particules de tailles les plus grossières peut se faire par toute technique permettant d'éliminer sélectivement les particules les plus grossières. Cette élimination peut se pratiquer sur le sol aqueux, sur le sol organique ou sur les deux.

Toutefois on préfère qu'il y ait au moins une séparation sur le sol aqueux. La technique préférée est la centrifugation.

Une centrifugation du sol aqueux correspondant à 1000 à 10 000 G pendant une heure donne en général de bons résultats. On peut toutefois aller jusqu'à des centrifugations correspondant à 50 000 G, la limite n'est qu'une limite d'ordre technologique.

Il est à noter que la centrifugation préalable à l'étape de constitution du sol organique, souvent appelée étape d'extraction, favorise cette dernière.

Les sols aqueux sont avantageusement réalisés par hydrolyse, de préférence par thermohydrolyse. Parmi les techniques utilisables pour la présente invention, on peut citer les techniques divulguées dans la demande de brevet européen publiée sous le numéro 97563 au nom de la demanderesse. On peut également citer la demande de brevet européen publiée sous le numéro 206907.

Lesdits sols obtenus selon l'invention présentent une concentration en composé de cérium IV qui peut être très élevée puisqu'elle peut aller jusqu'à 3,5 M à 4 M de CeO2.

On constate que le rendement d'extraction du cérium dans la phase organique est très bon puisqu'il peut atteindre 90 à 95 %.

Par diffusion quasi élastique de la lumière, on met en évidence la présence de colloïdes ayant un diamètre hydrodynamique variable avec les conditions de préparation et inférieure à 100 Ä (c'est à dire à la mite de détection des appareils actuels).

Les sols organiques ainsi élaborés présentent une excellente stabilité. On n'observe pas de décantation au bout de plusieurs mois.

Selon une des caractéristiques préférées de la présente invention, le sol est tel que, ajusté à une concentration en cérium métal contenu de 30 %, la viscosité du sol à 25 °C est au plus égale à 20mPa.S, avantageusement à 15mPa. S, de préférence à 10 mPa.S.

Il est également préférable que les contre anions de la solution de cérium source du sol, ne soient plus présents dans les divers sols selon la présente invention qu'a une teneur au plus égale à 0,1 ; avantageusement à 0,05, de préférence à 0,03 équivalents par 100 grammes de bioxyde de cérium. cette contrainte est surtout valable pour la couche superficielle des cristallites, couche d'épaisseur pentaatomique.

cette viscosité peut-être mesurée par "low shear" de marque Contraves en faisant varier le gradient de vitesse de 0,01 à 1.

Les sols organiques ainsi obtenus peuvent être dilué pour obtenir des concentrations de 10 à 500 de préférence de 50 à 200 ppm. Le diluant est avantageusement un carburant pour moteur à combustion interne de préférence diesel ; l'invention vise donc aussi des sols dont la phase organique est essentiellement constituée de gazole et de ses additifs.

L'invention concerne également l'utilisation des sols organiques préparés selon l'invention comme siccatifs dans l'industrie des peintures et vernis en vue d'accélérer le séchage des huiles insaturées et comme adjuvants de combustion dans les combustibles ou carburants liquides des générateurs énergétiques tels que moteurs à explosion, brûleurs à mazout ou propulseurs à réaction. Les sols selon l'invention peuvent également être utilisé en cosmétique.

## EXEMPLES DU PREMIER TERME DE L'ALTERNATIVE

**Réactifs :**

Sauf s'il en est disposé autrement les réactifs utilisés dans les exemples sont :

- un nitrate cérique préneutralisé à r = + 0,5 (cf. brevet européen au nom de la demanderesse publié sous le n°153227)

- un agent extractant de l'acide oléique, qui peut être remplacé sans modification par de l'oléine (70 % acide oléique + 30 % acide linoléique)

- un solvant, le SOLVESSO 150, qui n'est pas spécifique et peut être remplacé par de l'ISOPAR L, de l'hexane ou même du gasoil.

**Mode opératoire général des exemples:**

Sauf lorsque cela est précisé autrement ci-après, le mode opératoire des exemples est le suivant :

- la première étape consiste en la synthèse du précurseur qui est un sol aqueux de colloïdes de CeO2 dont la taille (MET ) est comprise entre 3 et 5 nm.

La solution de nitrate cérique à r = + 0,5 est placée dans un autoclave recouvert de tantale. La concentration de la solution utilisée est de 80 g/l exprimée en CeO2. L'autoclavage est réalisé à 160° C pendant 4 heures, avec une montée en température en 1 heure. L'agitation est maintenue pendant toute l'opération.
A l'issu de l'autoclavage, le produit est décanté puis séparé (filtré et essoré) des eaux mères. Il est ensuite redispersé dans l'eau, ce qui permet d'obtenir un sol aqueux stable. La concentration de ce sol est de 150 g/l.

*Exemple 1*

*Réactifs :*

- un nitrate cérique préneutralisé à r = + 0,5 et à une concentration de 80g/l en cérium.

- un agent extractant de l'acide oléique,

Première étape :

La solution CERELEC à r = +0,5 est placée dans un autoclave recouvert de tantale. La concentration de la solution utilisée est de 80 g/l exprimée en CeO2. L'autoclavage est réalisé à 160° C pendant 4 heures, avec une montée en température en 1 heure.
L'agitation est maintenue pendant toute l'opération.
La solution obtenue est filtrée sur fritté n° 4.
Le produit est ensuite redispersé dans l'eau, ce qui permet d'obtenir un sol aqueux stable. La concentration de ce sol est de 150 g/l.
La seconde étape de la préparation est le transfert des colloïdes de la phase aqueuse à la phase organique.
Dans un ballon, on place une quantité dosée de sol aqueux de CeO2, à laquelle on ajoute le mélange organique qui est tel que le rapport molaire acide oléique/cérium soit de 0.3 et le rapport SOLVESSO 150/acide oléique soit de 3.75.
Dans l'exemple considéré, ceci conduit à utiliser :

- 24.8 g de CeO2 (soit 0,165 l de sol à 150 g/l),
- 12.2 g d'acide oléique,
- 45.7 g de SOLVESSO 150.

Le mélange est ensuite chauffé à 100° C à reflux pendant environ 10 heures. Après refroidissement, la phase organique est séparée de la phase aqueuse puis filtrée sur filtre hydrophobe.
Le titre exact du sol est ensuite mesuré par calcination (extrait sec après 6 heures à 950°C).
On obtient ainsi un sol de stabilité mesurée supérieure à 4 mois (durée de l'échantillon), dont la concentration en CeO2 est de 29,1 %(masse), et dont la taille de colloïdes (mesurée par MET) est comprise entre 3 et 5nm.

*Exemple 2*

Le mode opératoire utilisé est similaire à celui de l'exemple 1. Les proportions des différents réactifs sont ajustées de façon à obtenir un sol stable de taille de particule 3 à 5 nm dont les caractéristiques sont :

- teneur en CeO2 de 47 % (masse),

- rapport acide oléique/cérium de 0,25.

### *Exemple 3*

Nous utilisons cette fois un mode opératoire similaire à celui de l'exemple 1 en ce qui concerne le transfert en phase organique mais qui en diffère dans l'étape de préparation du précurseur aqueux.

La solution rouge de nitrate cérique est thermohydrolysé dans les conditions standards (concentration de 80 g/l, température de 1 00°C, r = 0,5). Après séparation des eaux mères, l'hydrate de thermohydrolyse est repulpé dans l'eau puis séché par atomisation (atomiseur büchi, température d'attaque 240°C température de sortie 120°C).

Après cette étape de séchage, le produit reste parfaitement dispersable. Il est utilisé pour préparer le sol aqueux de CeO2 qui sert de précurseur au transfert en phase organique.

Le sol synthétisé selon ce produit est parfaitement stable, la taille de colloïdes (MET) est comprise entre 3 et 5 nm (figure 3, échantillon 9238) et sa teneur en CeO2 est de 39 % (masse).

Evaluation de la viscosité de sols organiques par la mesure du temps d'écoulement de 1 ml de sol dans une pipette Prolabo® (de marque brand : Blau Brand, Swift precision) de 1 ml (précision 1ml ± 0,006)

| Sol de cérium | Teneur en bioxyde de cérium | Oléique/Ce | Temps en secondes |
|---|---|---|---|
| Précurseur hydrolysé à 100° C | 30 % | 0,20 | 35,6 |
| Précurseur hydrolysé à 100° C | 30 % (28,1) | 0,30 | 41,1 |
| Précurseur hydrolysé à 150° C | 40 % (36..) | 0,20 | 17,4 |
| Précurseur hydrolysé à 150° C | 40 % (34,7) | 0,30 | 22,3 |
| Précurseur hydrolysé à 150° C | 40 % (37,.) | 0,30 | 26,3 |
| Précurseur hydrolysé à 160° C | 40 % (39,7) | 0,20 | 22,6 |
| *sol de l'exemple n° 4 (viscosité connue = à 10mPa.s)* | *40 %* | *isostéarique 0,30* | *21* |

La température d'hydrolyse, le rapport oléine/cérium et le taux réel de CeO2 influent tous en même temps sur la viscosité.

**EXEMPLES DU SECOND TERME DE L'ALTERNATIVE**

GENERALITES

La synthèse du sol organique de cérium se déroule en deux étapes : la synthèse d'un hydrate de cérium redispersible pour former un sol aqueux de cérium puis le transfert du sol en phase organique.

SYNTHESE DU SOL AQUEUX

Il s'agit d'une synthèse classique par thermohydrolyse d'une solution de nitrate de cérium IV à 80 g/l en oxyde de cérium préneutralisée à l'ammoniaque pour obtenir un rapport R = [OH-]/[Ce] proche de 0,5. La concentration en oxyde de cérium est voisine de 80 g/l. Après quatre heures de thermohydrolyse à 150°C dans un autoclave, le précipité de type hydrate de cérium est récupéré par filtration.

L'hydrate est ensuite remis en solution par repulpage dans l'eau. Une fraction du produit se disperse sous forme de sol, le reste formant une suspension moyennement stable. On vise généralement une concentration de 160 g/l. Le pH de la solution est acide (inférieur à pH = 1).

Un second type de précurseur peut également être utilisé. La solution de cérium IV toujours préneutralisée à R = 0,5 est cette fois-ci thermohydrolysée à 100°C pendant quatre heures. Après filtration de l'hydrate, le précipité est repris par de l'eau pour former un sol qui est séché par atomisation (Büchi ou LEA). L'hydrate séché est finalement remis en solution pour former un sol stable à la concentration de 160 g/l.

TRANSFERT DU SOL EN PHASE ORGANIQUE

Le transfert du sol en phase organique est obtenu à l'aide d'un agent d'extraction dilué dans un solvant organique. Le rapport molaire entre l'extractant et le cérium est fixé à 0,3 pour une quantité totale de cérium de l'ordre de 40 % en CeO2 (soit 32,5 % en cérium métal) dans la phase organique finale.
Le sol aqueux précédemment décrit est mis en contact avec la phase organique puis, sous agitation lente, la solution est portée progressivement à 100°C (reflux d'eau).
La synthèse se déroule en deux phases distinctes :

• Echange : la phase organique, initialement plus légère que le sol aqueux, se trouble progressivement. L'échange semble se produire très rapidement et la phase organique, devenant plus dense, passe alors dans le fond du réacteur. Lorsque les deux phases présentent une densité voisine, une émulsion importante se forme et il convient alors de ne pas agiter trop fortement le réacteur pour limiter le phénomène.

A la fin de l'échange, la phase aqueuse redevient limpide alors que la phase organique reste trouble. La durée de cette phase varie de 2 à 4 heures en fonction de la nature des précurseurs.

• Mûrissement : une fois l'échange terminé, il se produit une phase dite de mûrissement pendant laquelle la phase organique relargue les nitrates et le molécules d'eau entraînées par les agrégats d'hydrate lors du transfert. La phase organique devient progressivement limpide et un dégagement de vapeurs nitreuses est observé. En final, un sol organique stable parfaitement limpide de couleur noire avec reflets rouges est obtenu. La phase de mûrissement est de durée variable mais, dans les conditions suivies, n'est rarement inférieure à 6 heures.

Au niveau du laboratoire, le sol est récupéré par filtration sur filtre hydrophobe puis centrifugé pour éliminer d'éventuels agglomérats responsables d'un léger dépôt au cours du temps de certains produits.

*Exemple 4* **: extraction par de l'ACIDE ISOSTEARIQUE, sol 150°C**

Synthèse du sol aqueux : 415 ml d'une solution de nitrate de cérium IV (1,4 mol/l, 0,58 mol/l d'acide libre, d = 1,433) sont neutralisés par 835 ml d'une solution d'ammoniaque à 0,64 mol/l à la vitesse de 0,5 OH-/Ce/h de telle sorte à obtenir, en final, une solution à 80 g/l en Ce O2 préneutralisée à R = [OH]/[Ce] = 0,5.
La solution est ensuite placée dans un autoclave, portée à la température de 150°C en une heure puis laissée à 150°C pendant quatre heures. Après refroidissement, l'hydrate obtenu est filtré (fritté 4) et la teneur en oxyde déterminée par perte au feu à 900°C.
40 g d'oxyde de cérium sous forme d'hydrate est repris dans 250 ml d'eau de telle sorte à obtenir un sol aqueux de concentration 160 g/l.
Synthèse du sol organique : pour former 100 g de sol, 19,9 g d'acide isostéarique (AIS) sont dilués dans 40,1 g de SOLVESSO (coupe pétrolière aromatique) de telle sorte à obtenir en final un rapport molaire AIS/Ce de 0,3 et une concentration finale en CeO2 en phase organique de 40 %.
La phase organique est mise ne contact avec la phase aqueuse sous faible agitation puis le mélange est porté à reflux (100-103°C) pendant 15 h.
La phase organique, après décantation, est filtrée sur filtre hydrophobe puis éventuellement centrifugée à 4500 tr/min.
Le sol obtenu, de concentration 40 % massique en oxyde de cérium, présente une couleur noire limpide avec des reflets rouges. Il est parfaitement stable.
évolution de la viscosité en fonction du temps
la viscosité est mesurée par "low shear" de marque Contraves en faisant varier le gradient de vitesse de 0,01 à 1. dans tous les cas la viscosité des additif est indépendant du gradient de vitesse. la mesure est réalisée sur sol à 25°C à 30 % de métal contenu
le tableau suivant donne l'évolution de la viscosité en fonction du temps pour le sol ainsi préparé.

| durée du vieillissement (jours) | viscosité de l'additif en mPa.s (incertitude de ± 1 mPa.s) | |
|---|---|---|
| | flacon fermé | flacon ouvert |
| 0 (température de -18°C) | 150 | - |
| 0 | 10 | 10 |
| 68 | 11 | 11 |

(suite)

| durée du vieillissement (jours) | viscosité de l'additif en mPa.s (incertitude de ± 1 mPa.s) | |
|---|---|---|
| | flacon fermé | flacon ouvert |
| 118 | 10 | 11 |
| 165 | 10,5 | 11,7 |
| 292 | 9,5 | 12,8 |
| 330 | 9 | 13 |

**EXEMPLE 5 (comparatif): extraction par de l'ACIDE OLEIQUE, sol de 150°C**

On procède comme pour l'exemple 1 sauf en ce qui concerne la phase organique constituée de 19,7 g d'acide oléique (AO, extradant) et de 40,3 g de SOLVESSO (diluant).
Le sol obtenu est moins stable puisqu'il laisse apparaître un léger dépôt de quelques jours dans le fond du flacon (dépôt contenant notamment de l'oxyde de cérium).

**_Exemple 6_ : extraction par de l'ACIDE ISOSTEARIQUE, sol 100°C**

Synthèse du sol aqueux : 415 ml d'une solution de nitrate de cérium IV (1,4 mol/l, 0,58 mol/l d'acide libre, d = 1,433) sont neutralisés par 835 ml d'une solution d'ammoniaque à 0,64 mol/l à la vitesse de 0,5 OH-/Ce/h de telle sorte à obtenir, en final une solution à 80 g/l en CeO2 préneutralisée à R = [OH]/[Ce] = 0,5.
La solution est ensuite portée à reflux pendant 4 h puis l'hydrate obtenu est filtré. Il est remis en suspension à 150 g/l dans de l'eau puis atomisé sur un Büchi (800 ml/h, température d'entrée : 240°C, température de sortie 130°C). Finalement, l'hydrate est mis en solution à 160 g/l avant d'être extrait par une phase organique dans les mêmes conditions opératoires que pour l'exemple 1.
Le sol obtenu, de couleur noire mais non limpide, n'est pas très stable dans la mesure où un dépôt jaune apparaît au bout de quelques heures.
Si le sol organique est centrifugé à 4500 tr/min. pendant une heure, le sol est alors significativement plus stable dans la mesure où le dépôt n'était pas apparu au bout de plusieurs jours.

**_Exemple 7_ : extraction par de l'ACIDE ISOSTEARIQUE, sol 100°C centrifugé**

On procède globalement de la même façon que pour l'exemple 3 sauf que le sol aqueux est centrifugé à 4500 tr/min. pendant une heure pour éliminer les particules de plus de 60 nm probablement mal dissociées lors de la synthèse.
Le sol organique obtenu après extraction est alors beaucoup plus stable que celui de l'exemple 3 dans la mesure notamment où l'on n'a pas remarqué de dépôt après plusieurs semaines de stockage.
l'évolution de la viscosité est la même, au incertitude de mesure près, que celle de l'exemple N° 4.

**_Exemple 8_ (comparatif) : extraction par de l'acide éthyl-2 hexanoïque, sol de 150°C**

On procède comme dans l'exemple 1 sauf que l'extraction est réalisée par une phase organique contenant 10 g d'acide éthyl-2 hexanoïque et 50 g de SOLVESSO.
Après plus de 25 h d'extraction, un sol organique trouble est obtenu, dont la stabilité ne dépasse pas quelques jours (dépôt de particules dans le fond du flacon).

**_Exemple 9_ (comparatif) : extraction par de l'acide triméthyl-3,5,5 hexanoïque**

On procède comme dans l'exemple 1 sauf que l'extraction est réalisée par une phase organique constituée de 11 g d'acide triméthyl-3,5,5 hexanoïque et de 49 g de solvesso. Après plusieurs heures d'extraction, il se forme un mastic jaune dans le fond du ballon. La synthèse du sol n'est pas possible avec ce type d'extractant non substitué en $\alpha$ du groupement acide carboxylique.
Cet exemple, par comparaison avec l'exemple comparatif précédent, indique que lorsque l'on utilise un acide pur et que lorsque la ramification la plus proche de la fonction acide est à la fois méthyle et en gamma de la fonction H (confère le tableau ci dessus), les résultats sont significativement plus défavorables.

**Revendications**

1. Sol organique comportant :

   - des particules de bioxyde de cérium (IV)
   - un système acide amphiphile comportant au moins un acide de 11 à 50 atomes de carbone, présentant au moins une ramification en alpha, bêta, gamma, ou delta de l'atome porteur de l'hydrogène acide, et avec comme condition que lorsque ledit système est un mélange d'acides, la moyenne des atomes de carbone des acides du système est au moins égale à 10, et
   - un diluant,

   caractérisé en ce que lesdites particules sont sous forme d'agglomérats de cristallites, cristallites dont le $d_{80}$, avantageusement le $d_{90}$, est au plus égal à 5 nanomètres, 90 % en masse des agglomérats comportant de 1 à 5 cristallites, et en ce que le sol est susceptible d'être obtenu par un procédé comportant les étapes suivantes :

   (a) on soumet une phase aqueuse d'un sel de cérium (IV) à une opération de thermohydrolyse par chauffage de cette phase à une température comprise entre 80°C et la température critique de ladite phase, de manière à précipiter un bioxyde de cérium ;
   (b) on met en contact, simultanément ou consécutivement, une suspension aqueuse de bioxyde de cérium issue de l'étape (a) avec le système d'acide amphiphile précité et le diluant ; puis
   (c) on récupère le sol organique.

2. Sol selon la revendication 1, caractérisé en ce qu'il est susceptible d'être obtenu par le procédé précité dans lequel, entre les étapes (a) et (b), on procède à un séchage, de préférence par atomisation, puis on repulpe les particules de bioxyde de cérium séchées en phase aqueuse, laquelle est alors soumise à l'étape (b).

3. Sol selon l'une des revendications 1 ou 2, caractérisé en ce qu'il est susceptible d'être obtenu par le procédé précité dans lequel on soumet à une centrifugation la suspension aqueuse ou le sol organique précité.

4. Sol selon l'une quelconque des revendications 1 à 3, caractérisé par le fait que 80 %, de préférence 90% en masse des cristallites est de taille inférieure à une valeur choisie à l'avance dans l'intervalle 2 à 5 nanomètres, de préférence 3 à 4 nanomètres.

5. Sol selon l'une quelconque des revendications précédentes, caractérisé en ce que au plus 5 %, avantageusement au plus 1 %, de préférence au plus 0,5 %, en masse des particules de bioxyde de cérium (IV) présentent une taille au plus égale à 100 nanomètres (0,1 micromètre), avantageusement à 50 nanomètres (0,05 micromètre), de préférence à 20 nanomètres (0,02 micromètre).

6. Sol selon l'une quelconque des revendications précédentes, caractérisé en ce que la teneur en cérium (III) résiduel par rapport au cérium (IV) est inférieure à 1,5 %, avantageusement au plus égale à 1 % de préférence à 0,5%.

7. Sol selon l'une quelconque des revendications précédentes, caractérisé en ce que la teneur en bioxyde de cérium contenue, est comprise entre 20 et 60 %, de préférence 30 à 50% en masse.

8. Sol selon l'une quelconque des revendications précédentes, caractérisé en ce que le système acide amphiphile est un mélange d'acides.

9. Sol selon l'une quelconque des revendications précédentes, caractérisé en ce que l'acide du système acide amphiphile présente au moins une ramification, comportant au moins 2 atomes de carbone, de préférence au moins 3.

10. Sol selon l'une quelconque des revendications précédentes, caractérisé par le fait qu'au moins un des acides dudit système acide amphiphile présente un pKa au plus égal de 5, de préférence égal à 4,5.

11. Sol selon l'une quelconque des revendications précédentes, caractérisé en ce que le système d'acide amphiphile contient de l'acide isostéarique.

12. Sol selon l'une quelconque des revendications précédentes, caractérisé par le fait que ledit système acide amphiphile est un diester de l'acide phosphorique.

**EP 0 671 205 B1**

13. Sol selon l'une quelconque des revendications précédentes, caractérisé en ce que ledit sol est tel que, ajusté à une concentration en cérium métal contenu de 30 %, il présente une viscosité à 25°C au plus égale à 20 mPa.s, avantageusement à 15 mPa.s, de préférence à 10 mPa.s.

14. Sol selon l'une quelconque des revendications précédentes, caractérisé en ce que la viscosité du sol est telle qu'il faille au plus une demi minute pour qu'il s'en écoule un ml.

15. Sol selon l'une quelconque des revendications précédentes, caractérisé par le fait que le diluant est essentiellement constituée de gazole et de ses additifs.

16. Sol selon l'une quelconque des revendications précédentes, caractérisé en ce que le diluant contient au plus 50 %, de préférence au plus 20 % de carbure aromatique.

17. Procédé de préparation d'un sol organique selon l'une quelconque des revendications 1 à 16, caractérisé en ce qu'il comporte les étapes suivantes :

   (a) on soumet une phase aqueuse d'un sel de cérium (IV) à une opération de thermohydrolyse par chauffage de cette phase à une température comprise entre 80°C et la température critique de ladite phase, de manière à précipiter un bioxyde de cérium ;

   (b) on met en contact, simultanément ou consécutivement, une suspension aqueuse de bioxyde de cérium issue de l'étape (a) avec le système d'acide amphiphile précité et le diluant ; puis

   (c) on récupère le sol organique.

18. Procédé selon la revendication 17, caractérisé en ce que l'opération de thermohydrolyse est effectuée à une température comprise entre 80 et 350°C.

19. Procédé selon l'une des revendications 17 ou 18, caractérisé en ce que l'étape (b) est effectuée dans à une température allant de 60 à 150°C.

20. Procédé selon l'une quelconque des revendications 17 à 19, caractérisé en ce que entre les étapes (a) et (b), on procède à un séchage, de préférence par atomisation, puis on repulpe les particules de bioxyde de cérium séché en phase aqueuse, laquelle est alors soumise à l'étape (b).

21. Procédé selon l'une quelconque des revendications 17 à 20, caractérisé en ce que l'on soumet à une centrifugation la suspension aqueuse ou le sol organique précités.

22. Carburant pour moteur à combustion interne, caractérisé en ce qu'il est obtenu par mélange à un carburant usuel, d'un sol organique selon l'une quelconque des revendications 1 à 16.

23. Utilisation d'un sol organique selon l'une quelconque des revendications 1 à 16 comme adjuvant des gazoles pour moteur diesel.

**Claims**

1. Organic sol comprising:

   - cerium(IV) dioxide particles
   - an amphiphilic acid system comprising at least one acid of 11 to 50 carbon atoms exhibiting at least one branching alpha, beta, gamma or delta to the atom carrying the acidic hydrogen and with the condition that, when the said system is a mixture of acids, the mean of the carbon atoms of the acids of the system is at least equal to 10, and
   - a diluent,

   characterized in that the said particles are in the form of agglomerates of crystallites, the $d_{80}$, advantageously the $d_{90}$, of which is at most equal to 5 nanometres, 90% by mass of the agglomerates comprising from 1 to 5 crystallites, and in that the sol is obtainable by a process comprising the following stages:

(a) an aqueous phase of a cerium(IV) salt is subjected to a thermal hydrolysis operation by heating this phase at a temperature of between 80°C and the critical temperature of the said phase, so as to precipitate a cerium dioxide;
(b) an aqueous cerium dioxide suspension resulting from the stage (a) is brought into contact, simultaneously or consecutively, with the abovementioned amphiphilic acid system and the diluent; then
(c) the organic sol is recovered.

2. Sol according to claim 1, characterized in that it is obtainable by the abovementioned process in which, between the stages (a) and (b), drying is carried out, preferably by atomization, and then the dried particles of cerium dioxide are reslurried in an aqueous phase, which is then subjected to the stage (b).

3. Sol according to either of claims 1 or 2, characterized in that it is obtainable by the abovementioned process in which the abovementioned aqueous suspension or the abovementioned organic sol is subjected to centrifuging.

4. Sol according to any one of claims 1 to 3, characterized in that 80%, preferably 90%, by mass of the crystallites have a size less than a value chosen in advance within the range 2 to 5 nanometres, preferably 3 to 4 nanometres.

5. Sol according to any one of the preceding claims, characterized in that at most 5%, advantageously at most 1%, preferably at most 0.5%, by mass of the cerium(IV) dioxide particles exhibit a size at most equal to 100 nanometres (0.1 micrometre), advantageously to 50 nanometres (0.05 micrometre), preferably to 20 nanometres (0.02 micrometre).

6. Sol according to any one of the preceding claims, characterized in that the residual cerium(III) content with respect to cerium(IV) is less than 1.5%, advantageously at most equal to 1%, preferably to 0.5%.

7. Sol according to any one of the preceding claims, characterized in that the cerium dioxide content present is between 20 and 60%, preferably 30 to 50%, by mass.

8. Sol according to any one of the preceding claims, characterized in that the amphiphilic acid system is a mixture of acids.

9. Sol according to any one of the preceding claims, characterized in that the acid of the amphiphilic acid system exhibits at least one branching comprising at least 2 carbon atoms, preferably at least 3.

10. Sol according to any one of the preceding claims, characterized in that at least one of the acids of the said amphiphilic acid system exhibits a $pK_a$ at most equal to 5, preferably equal to 4.5.

11. Sol according to any one of the preceding claims, characterized in that the amphiphilic acid system comprises isostearic acid.

12. Sol according to any one of the preceding claims, characterized in that the said amphiphilic acid system is a phosphoric acid diester.

13. Sol according to any one of the preceding claims, characterized in that the said sol is such that, adjusted to a concentration of cerium metal present of 30%, it exhibits a viscosity at 25°C at most equal to 20 mPa·s, advantageously to 15 mPa·s, preferably to 10 mPa·s.

14. Sol according to any one of the preceding claims, characterized in that the viscosity of the sol is such that at most half a minute is necessary for one ml to flow therefrom.

15. Sol according to any one of the preceding claims, characterized in that the diluent is composed essentially of gas oil and its additives.

16. Sol according to any one of the preceding claims, characterized in that the diluent comprises at most 50%, preferably at most 20%, of aromatic hydrocarbon.

**17.** Process for the preparation of an organic sol according to any one of claims 1 to 16, characterized in that it comprises the following stages:

(a) an aqueous phase of a cerium(IV) salt is subjected to a thermal hydrolysis operation by heating this phase at a temperature of between 80°C and the critical temperature of the said phase, so as to precipitate a cerium dioxide;

(b) an aqueous cerium dioxide suspension resulting from the stage (a) is brought into contact, simultaneously or consecutively, with the abovementioned amphiphilic acid system and the diluent; then

(c) the organic sol is recovered.

**18.** Process according to claim 17, characterized in that the thermal hydrolysis operation is carried out at a temperature of between 80 and 350°C.

**19.** Process according to either of claims 17 of 18, characterized in that the stage (b) is carried out at a temperature ranging from 60 to 150°C.

**20.** Process according to any one of claims 17 to 19, characterized in that, between the stages (a) and (b), drying is carried out, preferably by atomization, and then the particles of dried cerium dioxide are reslurried in an aqueous phase, which is then subjected to the stage (b).

**21.** Process according to any one of claims 17 to 20, characterized in that the abovementioned aqueous suspension or the abovementioned organic sol is subjected to centrifuging.

**22.** Fuel for an internal combustion engine, characterized in that it is obtained by mixing, with a conventional fuel, an organic sol according to any one of claims 1 to 16.

**23.** Use of an organic sol according to any one of claims 1 to 16 as adjuvant in gas oils for diesel engines.

**Patentansprüche**

**1.** Organisches Sol, enthaltend:

- Cer(IV)dioxid-Teilchen
- ein saures amphiphiles System, das mindestens eine Säure mit 11 bis 50 Kohlenstoffatomen enthält und mindestens eine Verzweigung in alpha-, beta-, gamma- oder delta-Stellung zum Trägeratom des sauren Wasserstoffs aufweist, mit der Bedingung, daß, wenn das genannte System ein Säuregemisch ist, die mittlere Anzahl der Kohlenstoffatome der Säuren des Systems mindestens gleich 10 ist, und
- einen Verdünner,

dadurch gekennzeichnet, daß die genannten Teilchen in Form von Kristallitagglomeraten vorliegen, wobei der $d_{80}$, vorzugsweise der $d_{90}$, höchstens 5 Nanometer beträgt und 90 Massen-% der Agglomerate 1 bis 5 Kristallite enthalten, und daß das Sol durch ein Verfahren herstellbar ist, daß die folgenden Schritte aufweist:

(a) man unterzieht eine wäßrige Phase eines Cer(IV)-Salzes einer Thermohydrolyse durch Erwärmen dieser Phase auf eine Temperatur zwischen 80 °C und der kritischen Temperatur der genannten Phase, um ein Cerdioxid auszufällen;

(b) man bringt gleichzeitig oder nacheinander eine wäßrige Suspension des in Schritt (a) erhaltenen Cerdioxids mit dem genannten amphiphilen Säuresystem und dem Verdünner zusammen; danach

(c) trennt man das organische Sol ab.

**2.** Sol nach Anspruch 1, dadurch gekennzeichnet, daß es durch das genannte Verfahren herstellbar ist, indem man zwischen den Schritten (a) und (b) eine Trocknung durchführt, vorzugsweise durch Zerstäubung, dann aus den getrockneten Cerdioxid-Teilchen in wäßriger Phase wieder eine breiige Masse herstellt, die anschliessend Schritt (b) unterzogen wird.

**3.** Sol nach Anspruch 1 oder 2, dadurch gekennzeichnet, daß es durch das genannte Verfahren herstellbar ist, indem man die wäßrige Suspension oder das genannte organische Sol zentrifugiert.

EP 0 671 205 B1

4. Sol nach irgendeinem der Ansprüche 1 bis 3, dadurch gekennzeichnet, daß 80 Massen-%, vorzugsweise 90 Massen-%, der Kristallite eine mittlere Größe eines vorher gewählten Wertes im Bereich von 2 bis 5 Nanometern, vorzugsweise von 3 bis 4 Nanometern, haben.

5. Sol nach irgendeinem der vorangehenden Ansprüche, dadurch gekennzeichnet, daß höchstens 5 Massen-%, vorteilhafterweise höchstens 1 Massen-%, vorzugsweise höchstens 0,5 Massen-%, der Cer(IV)dioxid-Teilchen eine Größe von höchstens 100 Nanometern (0,1 Mikrometer), vorteilhafterweise von 50 Nanometern (0,05 Mikrometer), vorzugsweise von 20 Nanometern (0,02 Mikrometer), aufweisen.

6. Sol nach irgendeinem der vorangehenden Ansprüche, dadurch gekennzeichnet, daß der Gehalt des restlichen Cer(III) im Verhältnis zum Cer(IV) kleiner als 1,5 %, vorteilhafterweise höchstens 1 %, vorzugsweise 0,5 %, ist.

7. Sol nach irgendeinem der vorangehenden Ansprüche, dadurch gekennzeichnet, daß der Gehalt am Cerdioxid zwischen 20 und 60 Massen-%, vorzugsweise zwischen 30 und 50 Massen-%, liegt.

8. Sol nach irgendeinem der vorangehenden Ansprüche, dadurch gekennzeichnet, daß das saure amphiphile System ein Säuregemisch ist.

9. Sol nach irgendeinem der vorangehenden Ansprüche, dadurch gekennzeichnet, daß die Säure im sauren amphiphilen System mindestens eine Verzweigung aufweist, die mindestens 2, vorzugsweise mindestens 3, Kohlenstoffatome enthält.

10. Sol nach irgendeinem der vorangehenden Ansprüche, dadurch gekennzeichnet, daß mindestens eine der Säuren des genannten sauren amphiphilen Systems einen pKa von höchstens 5, vorzugsweise von 4,5, aufweist.

11. Sol nach irgendeinem der vorangehenden Ansprüche, dadurch gekennzeichnet, daß das amphiphile Säuresystem eine Isostearinsäure enthält.

12. Sol nach irgendeinem der vorangehenden Ansprüche, dadurch gekennzeichnet, daß das genannte saure amphiphile System ein Diester der Phosphorsäure ist.

13. Sol nach irgendeinem der vorangehenden Ansprüche, dadurch gekennzeichnet, daß das genannte Sol dergestalt ist, daß es bei einer Cermetallkonzentration von 30 % eine Viskosität bei 25 °C von höchstens 20 mPa·s, vorteilhafterweise von 15 mPa·s, vorzugsweise von 10 mPa·s, aufweist.

14. Sol nach irgendeinem der vorangehenden Ansprüche, dadurch gekennzeichnet, daß die Viskosität des Sols dergestalt ist, daß es höchstens eine halbe Minute braucht, bis davon 1 ml abgelaufen ist.

15. Sol nach irgendeinem der vorangehenden Ansprüche, dadurch gekennzeichnet, daß der Verdünner im wesentlichen aus Gasöl und seinen Additiven besteht.

16. Sol nach irgendeinem der vorangehenden Ansprüche, dadurch gekennzeichnet, daß der Verdünner zu höchstens 50 %, vorzugsweise zu höchstens 20 %, einen aromatischen Kohlenwasserstoff enthält.

17. Verfahren zur Herstellung eines organischen Sols nach irgendeinem der Ansprüche 1 bis 16, dadurch gekennzeichnet, daß es die folgenden Schritte aufweist:

   (a) man unterzieht eine wäßrige Phase eines Cer(IV)-Salzes einer Thermohydrolyse durch Erwärmen dieser Phase auf eine Temperatur zwischen 80 °C und der kritischen Temperatur der genannten Phase, um ein Cerdioxid auszufällen;
   (b) man bringt gleichzeitig oder nacheinander eine wäßrige Suspension des in Schritt (a) erhaltenen Cerdioxids mit dem genannten amphiphilen Säuresystem und dem Verdünner zusammen; danach
   (c) trennt man das organische Sol ab.

18. Verfahren nach Anspruch 17, dadurch gekennzeichnet, daß die Thermohydrolyse bei einer Temperatur zwischen 80 und 350 °C stattfindet.

19. Verfahren nach Anspruch 17 oder 18, dadurch gekennzeichnet, daß Schritt (b) bei einer Temperatur von 60 bis

18

150 °C stattfindet.

20. Verfahren nach irgendeinem der Ansprüche 17 bis 19, dadurch gekennzeichnet, daß man zwischen den Schritten (a) und (b) eine Trocknung, vorzugsweise durch Zerstäubung, durchführt, dann aus den getrockneten Cerdioxid-Teilchen in wäßriger Phase wieder eine breiige Masse herstellt, die anschliessend Schritt (b) unterzogen wird.

21. Verfahren nach irgendeinem der Ansprüche 17 bis 20, dadurch gekennzeichnet, daß man die wäßrige Suspension oder das genannte organische Sol zentrifugiert.

22. Treibstoff für einen Verbrennungsmotor, dadurch gekennzeichnet, daß er durch Vermischen eines organischen Sols nach irgendeinem der Ansprüche 1 bis 16 mit einem üblichen Treibstoff erhalten worden ist.

23. Verwendung eines organischen Sols nach irgendeinem der Ansprüche 1 bis 16 als Zusatz zu Gasöl für Dieselmotoren.